## Europäisches Patentamt

## European Patent Office

## Office européen des brevets

(11) Numéro de publication: **0 227 495 B1**

(12) **FASCICULE DE BREVET EUROPEEN**

(45) Date de publication du fascicule du brevet:
**23.05.90**

(51) Int. Cl.⁵: **F42B 10/66, F02K 9/38**

(21) Numéro de dépôt: **86402224.9**

(22) Date de dépôt: **07.10.86**

(54) Dispositif de pilotage pour projectile guidé au moyen de tuyères latérales.

(30) Priorité: **08.10.85 FR 8514882**

(43) Date de publication de la demande:
**01.07.87 Bulletin 87/27**

(45) Mention de la délivrance du brevet:
**23.05.90 Bulletin 90/21**

(84) Etats contractants désignés:
**DE GB IT SE**

(56) Documents cités:
**EP-A- 0 078 893**
**FR-A- 2 390 705**
**GB-A- 2 071 285**

(73) Titulaire: **THOMSON-BRANDT ARMEMENTS, Tour Chenonceaux 204, rond-point du Pont de Sèvres, F-92516 Boulogne-Billancourt(FR)**

(72) Inventeur: **Metz, Pierre, THOMSON-CSF SCPI 19, avenue de Messine, F-75008 Paris(FR)**
Inventeur: **Antonicelli, Marc, THOMSON-CSF SCPI 19, avenue de Messine, F-75008 Paris(FR)**

(74) Mandataire: **Trocellier, Roger et al, THOMSON-CSF SCPI, F-92045 PARIS LA DEFENSE CEDEX 67(FR)**

## Description

La présente invention se rapporte aux projectiles guidés, et elle concerne un propulseur à gaz mettant en oeuvre un propergol solide et comprenant une pluralité de tuyères latérales dont le débit relatif peut être commandé pour modifier la trajectoire de vol du projectile.

La capacité de manoeuvre des cibles offensives est constamment améliorée ; il en résulte que l'erreur d'interception, ou de distance de passage des projectiles augmente en conséquence. Au cours du tir d'un projectile, on doit considérer la phase de croisière pendant laquelle il est souhaitable de maintenir la vitesse de déplacement du projectile, et la phase terminale pendant laquelle l'erreur de trajectoire mesurée doit être annulée, ou tout au moins réduite à une valeur compatible avec le rayon d'efficacité de la charge militaire, lequel peut être nul dans le cas d'une charge creuse.

Il est donc prévu dans plusieurs types de projectiles guidés des moyens de dispositif de pilotage pour dévier la trajectoire du projectile, qui sont constitués d'un propulseur à gaz utilisant un propergol solide pour alimenter une pluralité de tuyères. On sait donc dévier la trajectoire de vol, en régulant le débit relatif des jets de gaz fournis par un ensemble de tuyères judicieusement disposées à la périphérie du corps du projectile. Il est également connu d'incliner les tuyères vers l'arrière du projectile pour créer conjointement une force de poussée longitudinale et une force de poussée latérale.

Une difficulté inhérente à l'emploi de propergols solides résulte du fait qu'une fois la combustion totalement amorcée, la pression de combustion doit se maintenir dans des limites relativement étroites. Une baisse de la pression de combustion, résultant d'un débit de gaz trop important conduit à l'extinction du propulseur. Inversement, un accroissement de la pression de combustion résultant d'une réduction des débits de gaz provoque l'explosion intempestive du propulseur.

Les propulseurs de guidage à propergol solide peuvent être répartis dans plusieurs classes distinctes, selon le mode de fonctionnement des moyens de régulation du débit relatif des jets de gaz des tuyères. Dans une première classe, comme décrit dans le brevet US-A 4 017 040, chaque paire de tuyères diamétralement opposées est équipée d'une valve ayant trois positions stables : une première et une seconde positions pour lesquelles le flux de gaz est dirigé dans l'une et l'autre tuyères et une troisième position pour laquelle le débit de gaz est également réparti entre les deux tuyères. Dans une seconde classe, illustrée par le dispositif décrit dans la demande de brevet française publiée sous le numéro 2 538 098, chaque paire de tuyères est équipée d'une valve ayant deux positions stables et opérant selon un cycle alternatif "tout ou rien". En variant le rapport cyclique d'ouverture de la valve, le flux de gaz peut être réaprti à la demande dans l'une ou l'autre des deux tuyères diamétralement opposées.

Dans ces dispositifs propulseurs, il n'est pas possible d'obtenir, à cause de la conception des moyens d'ouverture et de fermeture des vannes, et pour un nombre de tuyères supérieur ou égal à quatre, toutes les combinaisons théoriques possibles d'ouverture ou de fermeture des tuyères. Un tel dispositif est décrit dans la demande de brevet FR-A 2 508 414. Ce dispositif comprend une source d'énergie fournissant un flux de gaz à un jeu de tuyères fixes disposées dans un élément annulaire à l'intérieur duquel sont placées coaxialement des chemises mobiles. Ces dernières sont munies chacune d'un jeu de lumières pour le passage des gaz. L'agencement des lumières est tel que, à l'aide de la mobilité des chemises entre elles et par rapport à l'élément annulaire, n'importe laquelle des tuyères peut être alimentée. Des moyens sont donc prévus pour positionner les lumières en regard des orifices d'entrée des tuyères.

Plusieurs inconvénients ont été constatés. Il n'y a pas de système permettant de maintenir toutes les tuyères fermées. L'étanchéité des éléments mobiles les uns par rapport aux autres, devant être assurée par des joints, n'est pas parfaite. Du liait des fortes pressions, il se produit un rapide encrassement. De plus, la mise en oeuvre est encombrante et donc onéreuse.

D'autre part, dans un autre dispositif de pilotage correspondant au préambule de la revendication 1, comme décrit dans la demande de brevet européen publiée sous le numéro EP-A 0 078 893, l'ouverture et l'obturation de tuyères latérales alimentées par un générateur de gaz, sont réalisées par des moyens de commande constitués, pour chaque tuyère, d'un dispositif électromagnétique commandé indépendamment des dispositifs électromagnétiques des autres tuyères. Lors du déclenchement du générateur de gaz, et lorsqu'aucun ordre d'ouverture des tuyères n'est donné, un système d'échappement de gaz situé au centre du missile permet d'évacuer les gaz du générateur de gaz en évitant une pression interne pouvant entraîner une explosion.

Le but de l'invention est d'utiliser des moyens mis en place, en l'occurrence les moyens de commande, pour assurer la fonction d'échappement vers l'extérieur du projectile des gaz du générateur de gaz pouvant déclencher une explosion en cas de surpression interne grâce à une conception plus simple.

Le principal objet de l'invention est un dispositif de pilotage par commande de tuyères latérales pour projectile guidé tel qu'il est défini dans la revendication 1.

L'invention et ses particularités seront mieux comprises à la lecture de la description qui suit, et qui est illustrée par les figures suivantes représentant:

– Figure 1, un premier schéma explicatif concernant un premier fonctionnement du propulseur selon l'invention;

– Figure 2, un deuxième schéma explicatif concernant un deuxième fonctionnement du propulseur selon l'invention;

– Figures 3 et 4, des figures en coupe représentant une réalisation du propulseur selon l'invention;

– Figure 5, une coupe relative à une réalisation du piston de distribution dans le propulseur selon l'invention.

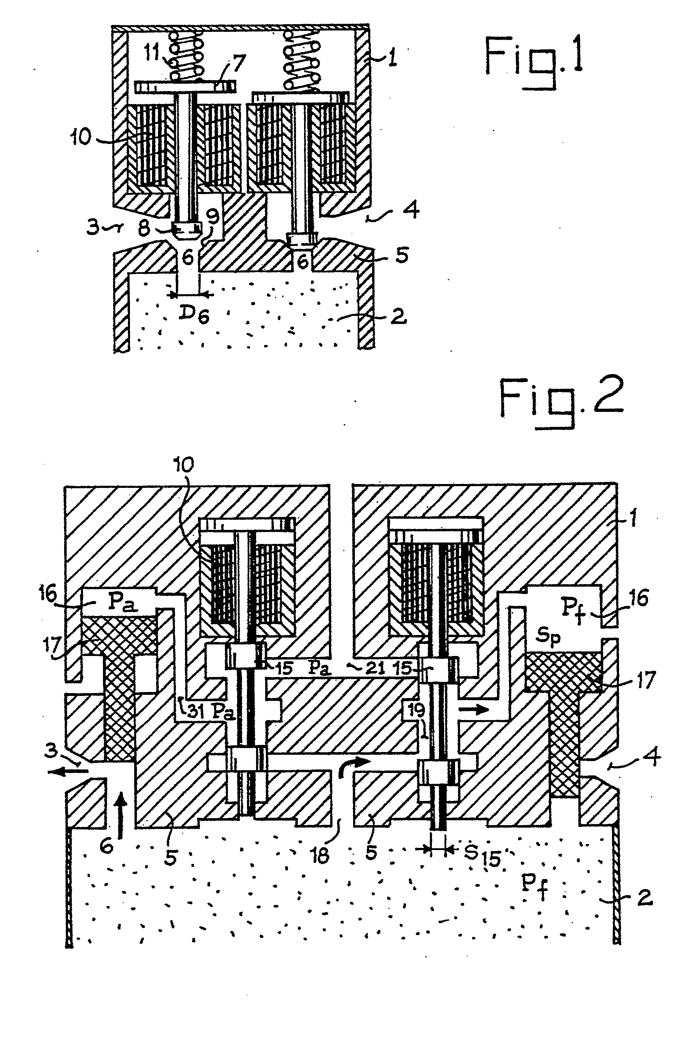

Le premier principe de fonctionnement illustré par la figure 1 est le plus simple. Sur cette figure, le corps 1 du propulseur est représenté partiellement. La partie non représentée renferme le propergol 2 cette partie est terminée par une cloison 5 d'un nombre N de trous 6 égal au nombre N de tuyères, dont deux sont représentées sur la figure et sont diamétralement opposées (elles sont repérées 3 et 4). Chacun des trous est en communication avec une tuyère, et est fermé ou non par un piston obturateur 7. Ce dernier est terminé par une partie élargie 8 qui vient, lors de l'obturation, en appui sur un siège 9 pratiqué sur le bord du trou 6. Ces pistons sont actionnés chacun par un moyen de commande qui est un dispositif électromagnétique 10. Ce dernier est actionné indépendamment des autres. Lorsqu'il est initié, il fait translater le piston obturateur 7, de manière à ce que le trou correspondant soit ouvert. Lorsqu'il n'est pas initié, le piston obturateur est ramené dans la position de fermeture du trou au moyen d'un dispositif à ressort symbolisé par un ressort 11 prenant appui sur un fond 12 fixé au corps 1. Lorsque le dispositif électromagnétique 10 translate le piston obturateur 7 et ouvre le trou 6, le ressort est comprimé. Lorsque le dispositif électromagnétique relache son effort, le ressort ramène le piston contre le siège 9 et ferme le trou 6.

Comme précisé précédemment, la combustion du propergol 2, une fois amorcé ne peut plus être arrêtée. Il s'ensuit que, pour diverses raisons, la pression à l'intérieur du réservoir à propergol peut augmenter de manière intempestive jusqu'à ce que le missile porteur du propulseur soit menacé d'explosion. Le dispositif de sécurité prévu selon l'invention, est assuré par les moyen de commande précédemment décrits, et en particulier par le dispositif ressort 11. En effet, le diamètre $D_6$ du trou 6 est déterminé, ainsi que sa surface $S_6$. On connaît également la pression maximale $P_{MAX}$ tolérée lors d'un fonctionnement normal du propulseur, et au-dessus de laquelle on estime qu'il y a risque d'explosion. On connaît donc la force $F_{MAX}$ égale à

$$\frac{P_{MAX}}{S_6}$$

et qui est la force à laquelle le ressort 11 ne doit plus remplir sa fonction. Si lors du fonctionnement la pression à l'intérieur du réservoir à propergol augmente et dépasse la pression maximale $P_{MAX}$, le ressort ne maintient plus le piston obturateur contre le trou, et la surpression disparaît par l'ouverture d'au moins un des pistons. Le ressort assure la fermeture de la tuyère, la fonction de soupape de sécurité et par là même, une fonction d'autorégulation de la pression du gaz.

Un deuxième fonctionnement est envisagé en référence à la figure 2 un étage supplémentaire dans le fonctionnement a été rajouté, c'est-à-dire que le dispositif électromagnétique n'agit plus directement sur le piston obturateur 7, mais sur un dispositif qui assure l'obturation ou l'ouverture des tuyères. On retrouve sur cette figure plusieurs éléments de la figure précédente, c'est-à-dire le corps 1, le propergol 2, les tuyères 3 et 4, les trous d'échappement du propergol 6 et les dispositifs électromagnétiques 10. La fonction de fermeture des trous 6 n'est plus assurée par un dispositif à ressort, mais par un dispositif qui utilise les gaz sous pression qui sortent du réservoir de propergol.

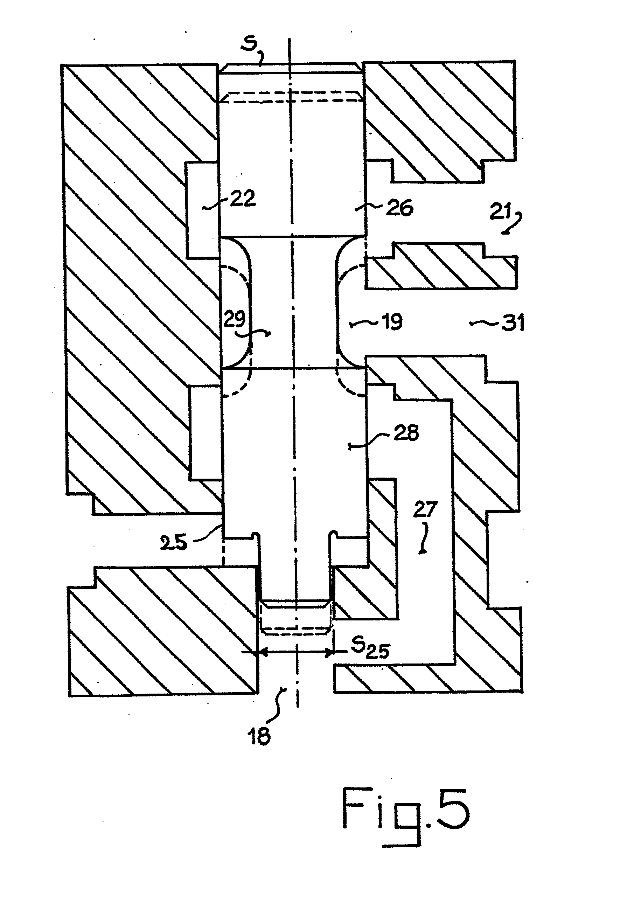

Les dispositifs électromagnétiques actionnent des pistons de commande 15 qui, dans la position de fermeture des tuyères met en communication, par l'intermédiaire d'un conduit 31, les gaz sous pression avec la chambre de commande 16 agissant sur un piston obturateur 17. Un trou 18 est pratiqué dans la cloison 5 et est en communication avec les différentes chambres 19, dans lesquelles sont logés les pistons de commande 15. Ces chambres sont également en communication avec les chambres de pression 16, de sorte que le piston de commande 15 permet ou non le passage du gaz sous pression vers les chambres de pression. Le détail de la forme du piston de commande et des chambres 19 est décrit plus loin et en regard de la figure 5.

Sur la partie gauche du propulseur, la tuyère 3 est ouverte. Le piston de commande 15 ne permet pas le passage des gaz sous pression vers la chambre de pression 16. Cette position est maintenue grâce au fait que le piston de commande 15 a son extrémité en contact avec le propergol en combustion par l'intermédiaire du trou 20. Les gaz qui étaient préalablement sous pression dans la chambre 16, lors de la fermeture précédente de la tuyère 3 peuvent s'échapper à l'extérieur du propulseur, le piston de commande permettant dans cette position le libre passage de ces gaz par un conduit 21 relié à l'extérieur. La chambre de pression 16 est donc à la pression atmosphérique $P_a$. Lorsque le dispositif électromagnétique 10 est initié, la tuyère est fermée ; c'est le cas de la partie droite de la figure 2. La force électromagnétique est supérieure à la force déterminée par le rapport

$$\frac{P_F}{S_{15}}$$

de la pression de fonctionnement des gaz sur la section du trou 15. Le piston de commande 15 est donc translaté suffisamment pour ouvrir le passage aux gaz en combustion provenant du trou 18, et pour obturer le libre passage des gaz entre la chambre de combustion 16 et le conduit 21 de mise à l'air libre. La section du piston obturateur 17 dans la chambre de pression 16 est supérieure à la section du même piston obstruant ou non le trou 6 d'où s'échappent les gaz de combustion. Le rapport des deux sections du piston obturateur 17 fait que dans ces cas là, le piston vient obturer la tuyère 4 jusqu'à ce qu'il soit en butée à l'intérieur de la chambre de pression 16.

Si la pression à l'intérieur du réservoir de propergol 2 augmente de façon trop importante, le piston de commande 15 ayant une extrémité débouchant dans cette chambre et ayant une section $S_{20}$, il subira une force de plus en plus importante qui aura tendance à s'opposer à l'action du dispositif électromagnétique 10. Ce dernier est prévu pour translater le piston de commande avec une force prédéterminée $F_P$ en fonction de la pression limite que l'on s'autorise à avoir dans le réservoir. $S_{15}$ étant la section de piston de commande 15 débouchant dans le réservoir de propergol, cette force est liée à la pression des gaz par la formule suivante : $F_{MAX} = P_{MAX} \times S_{15}$. Dès que la pression à l'intérieur du réservoir de propergol 2 dépassera cette valeur $P_{MAX}$, le piston de commande reviendra dans la position qu'il occupait précédemment et qui correspond à l'ouverture de la tuyère. Cette dernière étant ouverte la pression à l'intérieur du réservoir de propergol redescendra, et l'explosion du propulseur sera évitée.

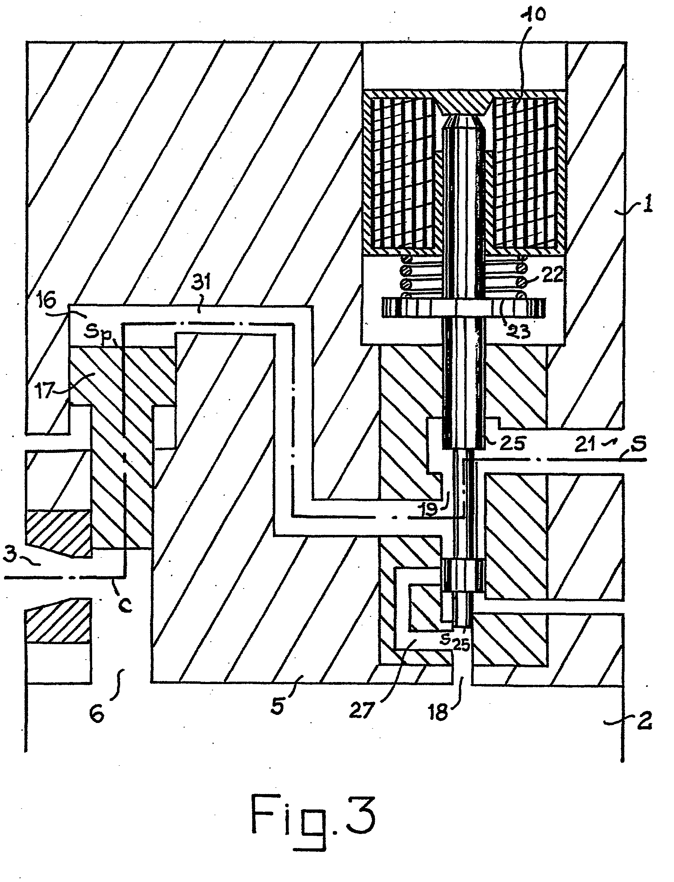

La figure 3 représente une réalisation selon l'invention utilisant partiellement chacun des deux principes décrits précédemment. On y retrouve beaucoup d'éléments faisant partie du schéma de la figure 2 ; le corps 1, le réservoir de propergol 2, la tuyère 3, le dispositif électromagnétique 10, le piston de commande légèrement modifié 25, la chambre de pression 16 de section $S_p$, le piston de fermeture 17, l'orifice 18 permettant de mettre en contact le piston de commande avec la chambre de combustion du réservoir de propergol, la chambre 19 du piston de commande, le trou 6 permettant aux gaz d'alimenter la tuyère, le conduit 31 et l'orifice 21 permettant aux gaz de s'échapper vers le milieu extérieur. Le principe de commande de l'ouverture et de la fermeture de la tuyère 3 est très voisin de celui représenté sur la figure 2. La différence consiste à utiliser un ressort 22 en appui sur le dispositif électromagnétique 10. On peut également envisager de disposer le ressort en appui sur le fond 23, comme dans le premier fonctionnement décrit. Le ressort permet de maintenir le piston de commande dans une position pour que la tuyère soit fermée. Le dispositif électromagnétique 10 utilisé permet un déplacement inversé du piston de commande, et le courant électrique n'est utilisé que pour l'ouverture de la tuyère 3. Lorsque le dispositif électromagnétique est alimenté le piston de commande 25 se trouve dans la position qui est représentée sur la figure 3, le ressort 22 étant comprimé. Dans cette position le piston de fermeture est reculé, la tuyère est opérationnelle, les gaz se trouvant préalablement dans la chambre de pression 16 s'évacuent par l'intermédiaire de l'orifice 21, la configuration du piston de commande 25 et de sa chambre 19 étant telle que le passage reste libre pour ces gaz provenant de la chambre de pression. Dans cette position, le piston de commande empêche les gaz provenant du réservoir de propergol de pénétrer à l'intérieur du dispositif de commande. En effet, le piston de commande obstrue par son extrémité toute la chambre dans laquelle il est logé.

Pour fermer la tuyère 3, on supprime l'alimentation du dispositif électromagnétique 10. La force fournie par la ressort 22 sur le piston de commande 25 est supérieure à la force déterminée par la pression de fonctionnement des gaz agissant sur l'extrémité du piston de commande. Celui-ci est donc repoussé vers le réservoir de propergol dans une position telle qu'il obstrue l'orifice 21 d'échappement vers le milieu extérieur, et telle que, au moyen d'une canalisation 27 court-circuitant l'extrémité du piston de commande, les gaz en combustion puissent pénétrer à l'intérieur de la chambre 19 du piston de commande et se diriger vers la chambre de pression 16, refoulant ainsi le piston de fermeture 17 qui obstrue totalement la tuyère.

De même ici, lorsque la pression augmente anormalement dans le réservoir de propergol, le ressort 22 est calculé pour céder si cette pression dépasse la pression $P_{MAX}$ prédéterminée. La force qu'applique le ressort sur le piston de commande est déterminée par la formule suivante $F_R = P_{MAX} \times S_{25}$, $S_{25}$ étant la surface du piston de commande 25 en contact avec le réservoir de propergol 2. Dans ce cas, la tuyère est à nouveau ouverte et la pression à l'intérieur du réservoir de propergol retombe.

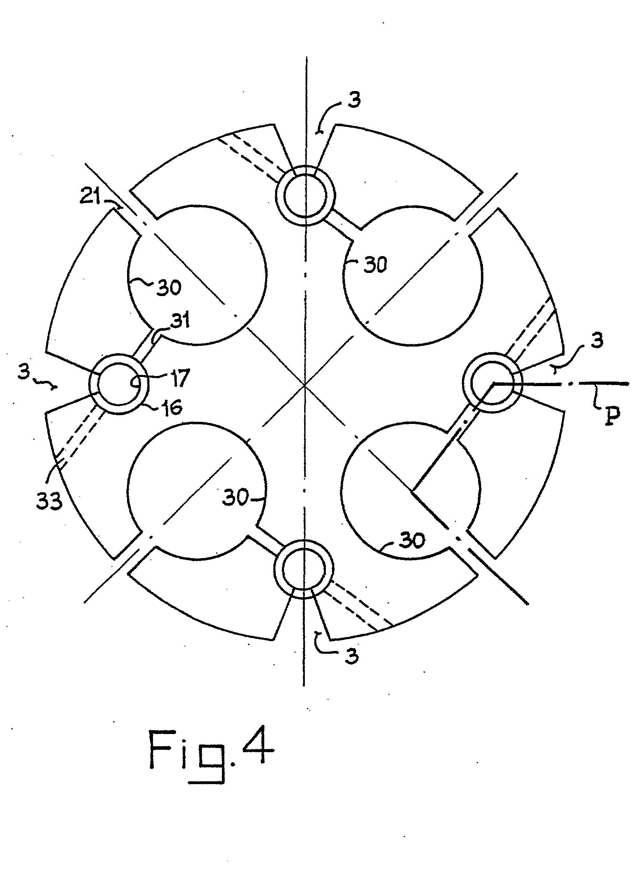

La figure 4 représente un agencement possible de l'invention dans le cas de quatre tuyères. Pour comprendre cet agencement par rapport à la réalisation écrite figure 3, une ligne de coupe C a été représentée en trait fort. Cette ligne représente la coupe suivant laquelle la figure 3 est dessinée dans le cas de l'agencement décrit figure 4. Les quatre tuyères et leur système de commande sont répartis de façon symétrique dans le propulseur et occupent chacun un secteur circulaire dans le corps 1. Les quatre chambres 30 représentent les endroits où sont logés les dispositifs de commande. Les chambres sont en communication avec le milieu extérieur toujours par l'intermédiaire de l'orifice 21. Les chambres de pression 16 et les pistons 17 d'ouverture ont été représentés de façon superposée, les pistons de commande étant adjacents aux tuyères 3. En considérant simultanément la figure 3, sur laquelle un trait fort repéré S représente les plans de coupe de la figure 4, un premier conduit 31 relie les emplacements des dispositifs de commande 30 aux chambres de pression 16. On constate sur la figure 4 que les tuyères et leurs dispositifs de commande sont rapprochés et logés dans quatre secteurs circulaires égaux. Cet agencement est une possibilité de réalisation mais d'autres agencements, notamment pour huit tuyères peuvent être prévus. L'axe repéré P et représenté en trait fort, est l'axe suivant lequel la coupe de la figure 3 a été effectuée.

Pour réaliser les conduits intérieurs tels que ceux repérés 31 sur la figure 4, on peut procéder à un perçage 33 pratiqué dans l'alignement du conduit 31, puis reboucher la partie inopérante représentée en trait interrompu sur cette figure.

Le corps 1 est en un matériau composite qui est léger, mécaniquement et thermiquement résistant, et qui a un beau coefficient de frottement. Ceci est nécessaire, à cause des fortes différences de pressions, de température, surtout de part et d'autre des pistons dont les ajustements dans le corps sont de la plus haute qualité. Ce matériau est appelé par l'homme du métier "carbone-carbone". Il s'agit en fait de fibres de carbones enrobées d'un produit à base de carbone en poudre lorsqu'il s'agit de fil. Pour une pièce plus complexe et non filiforme, comme c'est le cas pour le corps 1, la stucture est plus complexe.

Le ressort a été représenté de façon symbolique en ressort à boudin. Il est à noter qu'un ressort à lames, ou de structure à lames, peut être avantageusement employé. Dans le cas de quatre tuyères, on envisage d'utiliser un ressort à lames cruciforme, fixé par son milieu au centre du corps, et dont les extrémités des branches appliquent leur force chacune sur un piston de fermeture ou un piston de commande.

Sur la figure 5 le piston de commande 25 et sa chambre 19 sont représentés en détail. Cette figure correspond à la réalisation représentée sur la figure 3. La position du piston de commande est la même sur cette figure c'est-à-dire en position commandant l'ouverture de la tuyère. Le piston possède quatre parties, une première et une deuxième parties respectivement 26 et 28 de sections S, ces sections correspondent à la section minimale de la chambre 19. Un rétrécissement du piston 29 réunit ces parties 26 et 28. L'extrémité 32 du piston a une section $S_{25}$ plus réduite que les autres. Cette extrémité est toujours en contact avec les gaz provenant du réservoir de propergol. La chambre 19 possède en regard de l'orifice 21 permettant l'évacuation des gaz une section plus importante symbolisée par une chambre 22. En regard de l'orifice 31 permettant au gaz d'atteindre la chambre de pression, la chambre a une section égale à la section maximale S du piston. Dans la position du piston représenté en trait fort, l'orifice d'évacuation 21 et le premier conduit 31 sont en communication pour permettre l'échappement des gaz ayant été utilisés préalablement pour la fermeture de la tuyère. Comme représentés sur la figure 3 les gaz de combustion provenant du réservoir de propergol 2 ne peuvent pas atteindre la chambre de pression car la deuxième partie de section large 28 obstrue complètement le deuxième conduit 27 qui court-circuite l'extrémité du piston.

La position du piston de commande correspondant à une fermeture de la tuyère est représentée en trait interrompu simplement en ce qui concerne les parties fonctionnelles du piston. Celui-ci s'est déplacé vers le bas de la figure et la première partie 26 de section large du piston isole l'orifice 21 et la chambre 22 et empêche ainsi les gaz de s'échapper à l'extérieur du propulseur. Par contre, la deuxième partie de section large 28 du premier piston est suffisamment descendue pour mettre en communication le deuxième conduit 31 avec le conduit 27 d'arrivée des gaz. Les gaz en combustion peuvent donc atteindre la chambre de pression et agir sur le piston de fermeture de la tuyère. Le principe de fonctionnement représenté à la figure 1 et la réalisation représentée figure 3, utilisant tous les deux un ressort pour maintenir soit le piston seul dans une position de fermeture de la tuyère, soit de commander la fermeture de la tuyère par le piston 17 permettent d'utiliser peu d'énergie. En effet, les tuyères sont le plus souvent fermées, et dans le cas des figures 1 et 3, c'est le piston qui fournit l'énergie nécessaire au maintien de cet état de fermeture. Dans le cas de la figure 2 c'est le dispositif électromagnétique qui assure l'état de fermeture de la tuyère ce qui nécessite .en permanence une consommation d'énergie électrique. Dans le cas de la figure 1 et 3 l'énergie électrique nécessaire pour actionner le dispositif électromagnétique est simplement utilisée pour l'ouverture éventuelle de la tuyère.

Les réalisations décrites précédemment le sont à titre d'exemple, mais on peut envisager dans le corps 1 des agencements différents. Il pourrait s'avérer intéressant de réduire au minimum ce corps, voir de le supprimer.

## Revendications

1. Dispositif de pilotage au moyen d'un propulseur de tuyères latérales pour projectiles guidés, comprenant:
   – un nombre N de tuyères latérales (3);
   – un générateur de gaz (2) destiné à alimenter lesdites tuyères;
   – des moyens de commande de l'obturation et de l'ouverture des tuyères afin d'agir sur la trajectoire du projectile, constitués pour chaque tuyère d'un dispositif électromagnétique (10) commandé indépendamment des dispositifs électromagnétiques des autres tuyères afin d'obturer ou d'ouvrir les tuyères indépendamment les unes des autres, le dispositif étant caractérisé en ce que les moyens de commande sont agencés de manière à assurer la fonction de soupape de sécurité pour éviter l'explosion du générateur de gaz dans le cas où aucune des tuyères ne serait ouverte à un moment déterminé.

2. Dispositif de pilotage selon la revendication 1, caractérisé en ce que chacun des dispositifs électromagnétiques (10) commandant en translation un piston de commande (7, 15, 25) dont une première extrémité débouche dans la chambre de combustion du générateur de gaz (2), commandant ainsi l'ouverture et la fermeture de la tuyère correspondante.

3. Dispositif de pilotage selon la revendication 2, caractérisé en ce que, chaque dispositif électromagnétique (10) assure, par l'intermédiaire du piston de commande (7, 25), l'orsqu'il est alimenté l'ouverture de la tuyère correspondante, et en ce qu'un ressort (11, 22) agissant sur ledit piston de commande, assure, lorsque le dispositif électromagnétique n'est pas alimenté, la position du piston de commande permettant la fermeture de la tuyère correspondante.

4. Dispositif de pilotage selon la revendication 2, caractérisé en ce que le piston de commande (15), lorsque le dispositif électromagnétique (10) est alimenté, commande la fermeture de la tuyère (3) en assurant un libre passage des gaz de combustion provenant du générateur de gaz (2) vers une chambre de pression (16) dans laquelle coulisse un piston (7) assurant lui-même l'ouverture et la fermeture de la tuyère avec le milieu extérieur, et ceci de par la position et la forme dudit piston de commande par rapport à la chambre (19) dans laquelle il coulisse, l'ouverture de la tuyère étant assurée, lorsque le dispositif électromagnétique n'est plus alimenté, par une nouvelle position du piston de commande qui met en communication avec l'air extérieur la chambre de pression.

5. Dispositif de pilotage selon la revendication 3, caractérisé en ce que la fermeture de la tuyère est assurée par le fait que, sous la pression du ressort (22), le piston de commande (25) se trouve dans une position qui met en communication avec le générateur des gaz (2) une chambre de pression (16) dans laquelle coulisse un piston (17) assurant lui-même la fermeture de la tuyère, l'ouverture étant assurée par le fait que le piston de commande sous l'action du dispositif électromagnétique (10) met alors en communication la chambre de pression avec l'air extérieur.

6. Dispositif de pilotage selon l'une quelconque des revendications 3 ou 4, caractérisé en ce que le ressort (11, 22) assurant la fermeture de la tuyère (3) a une raideur telle qu'il cède à la pression des gaz provenant du générateur des gaz (2) à partir d'une pression déterminée ($P_{MAX}$), et ceci par l'intermédiaire de la surface ($S_{25}$) de l'extrémité du piston de commande (7, 25).

7. Dispositif de pilotage selon l'une quelconque des revendications 3 à 5, caractérisé en ce que le piston de commande (25) possède deux parties larges (26, 28) entourant une partie étroite (29) qui, lorsque le piston de commande se déplace à l'intérieur de la chambre (19), permet de mettre en communication par l'intermédiaire d'un premier conduit (31) la chambre de pression (16), soit avec l'air extérieur par l'intermédiaire d'un orifice (21) pour assurer l'ouverture de la tuyère (3), soit avec les gaz provenant du générateur des gaz (2) par l'intermédiaire d'un deuxième conduit (27) pour permettre la fermeture de la tuyère.

8. Dispositif de pilotage selon la revendication 7, caractérisé en ce que la section ($S_{25}$) de l'extrémité du piston de commande (25) se trouvant en contact avec les gaz issus du générateur de gaz (2), et la raideur du ressort (22) ont des valeurs déterminées de manière à ce que ledit ressort cède sous la pression des gaz au-dessus d'une valeur de pression ($P_{MAX}$) déterminée.

9. Dispositif de pilotage selon l'une quelconque des revendications précédentes, caractérisé en ce que chaque ensemble formé par une tuyère (3) et tous les organes nécessaires à sa commande est disposée dans un corps (1) de façon à occuper un secteur circulaire déterminé.

10. Dispositif de pilotage selon l'une quelconque des revendications précédentes et comprenant un corps (1) à l'intérieur duquel est logé le dispositif, caractérisé en ce que ledit corps est en un matériau composite à base de carbone et appelé carbone-carbone.

## Patentansprüche

1. Einrichtung zum Steuern lenkbarer Projektile mit Hilfe eines Antriebs mit Seitendüsen, die folgende Komponenten aufweist:
- eine Anzahl von N Seitendüsen (3);
- einen Gasgenerator (2) zur Versorgung der Düsen;

- Steuermittel zum Schließen und Öffnen der Düsen zur Beeinflussung der Projektilflugbahn, die für jede Düse aus einer elektromagnetischen Vorrichtung (10) bestehen, welche unabhängig von den elektromagnetischen Vorrichtungen der anderen Düsen zum voneinander unabhängigen Schließen und Öffnen der Düsen gesteuert wird, dadurch gekennzeichnet, daß die Steuermittel so ausgebildet sind, daß sie die Funktion eines Sicherheitsventils ausüben, um die Explosion des Gasgenerators in dem Falle zu vermeiden, daß keine der Düsen in einem bestimmten Moment geöffnet ist.

2. Steuereinrichtung nach Anspruch 1, dadurch gekennzeichnet, daß jede der elektromagnetischen Vorrichtungen (10) die Verschiebung eines Steuerkolbens (7, 15, 25) bewirkt, von dem ein erstes Ende in die Brennkammer des Gasgenerators (2) mündet, so daß auf diese Weise das Öffnen und Schließen der entsprechenden Düse gesteuert wird.

3. Steuereinrichtung nach Anspruch 2, dadurch gekennzeichnet, daß jede der elektromagnetischen Vorrichtungen (10) über den Steuerkolben (7, 25) im Falle ihrer Erregung das Öffnen der entsprechenden Düse bewirkt und daß eine auf den Steuerkolben wirkende Feder (11, 22) bei fehlender Erregung der elektromagnetischen Vorrichtung diejenige Stellung des Steuerkolbens herstellt, die ein Schließen der entsprechenden Düse ermöglicht.

4. Steuereinrichtung nach Anspruch 2, dadurch gekennzeichnet, daß der Steuerkolben (15) bei Erregung der elektromagnetischen Vorrichtung (10) die Schließung der Düse (3) unter Gewährleistung eines freien Durchgangs der vom Gasgenerator (2) kommenden Brenngase zu einer Druckkammer (16) bewirkt, in welcher ein Kolben (7) gleitet, der seinerseits das Öffnen und Schließen der Düse zur äußeren Umgebung hin bewirkt, und zwar durch die Stellung und die Form des Steuerkolbens in bezug auf die Kammer (19), in der er gleitet, wobei das Öffnen der Düse, wenn die elektromagnetische Vorrichtung nicht mehr erregt wird, durch eine neue Stellung des Steuerkolbens bewirkt wird, die die Druckkammer mit der Außenluft in Verbindung bringt.

5. Steuereinrichtung nach Anspruch 3, dadurch gekennzeichnet, daß das Schließen der Düse durch den Umstand erfolgt, daß sich der Steuerkolben (25) unter dem Druck der Feder (22) in einer Stellung befindet, die mit dem Gasgenerator (2) eine Druckkammer (16) in Verbindung bringt, in welcher ein Kolben (17) gleitet, der seinerseits das Schließen der Düse bewirkt, während das Öffnen durch den Umstand bewirkt wird, daß der Steuerkolben unter der Einwirkung der elektromagnetischen Vorrichtung (10) die Druckkammer mit der Außenluft in Verbindung bringt.

6. Steuereinrichtung nach einem beliebigen der Ansprüche 3 oder 4, dadurch gekennzeichnet, daß die das Schließen der Düse (3) bewirkende Feder (11, 22) eine solche Steifigkeit besitzt, daß sie ab einem bestimmten Druck ($P_{MAX}$) dem Druck der vom Gasgenerator (2) kommenden Gase nachgibt, und zwar über die Oberfläche ($S_{25}$) des Endes des Steuerkolbens (7, 25).

7. Steuereinrichtung nach einem beliebigen der Ansprüche 3 bis 5, dadurch gekennzeichnet, daß der Steuerkolben (25) zwei breite Abschnitte (26, 28) besitzt, die einen engen Abschnitt (29) umgeben, der es ermöglicht, wenn sich der Steuerkolben im Inneren der Kammer (19) verschiebt, über einen ersten Kanal (31) die Druckkammer (16) entweder über eine Öffnung (21) mit der Außenluft zum Öffnen der Düse (3) oder über einen zweiten Kanal (27) mit den vom Gasgenerator (2) kommenden Gasen zum Schließen der Düse verbindet.

8. Steuereinrichtung nach Anspruch 7, dadurch gekennzeichnet, daß der Querschnitt ($S_{25}$) des Endes des Steuerkolbens (25), der mit den vom Gasgenerator (2) abgegebenen Gase in Berührung steht, und die Steifigkeit der Feder (22) solche Werte besitzen, daß die Feder unter einem Gasdruck nachgibt, der oberhalb eines bestimmten Druckwertes ($P_{MAX}$) liegt.

9. Steuereinrichtung nach einem beliebigen der vorhergehenden Ansprüche, dadurch gekennzeichnet, daß jede durch eine Düse (3) und alle zu ihrer Steuerung erforderlichen Organe gebildete Gruppe in einem solchen Körper (1) untergebracht sind, daß sie einen bestimmten Kreissektor besetzen.

10. Steuereinrichtung nach einem beliebigen der vorhergehenden Ansprüche, mit einem Körper (1), in dessen Innerem die Einrichtung untergebracht ist, dadurch gekennzeichnet, daß der Körper aus einem Verbundmaterial auf Kohlenstoffbasis besteht, das den Namen Carbone-Carbone trägt.

## Claims

1. A steering device for guided projectiles using lateral nozzles, comprising:
- a plurality of N lateral nozzles (3);
- a gas generator (2) intended to feed said nozzles;
- means for controlling the closing and the opening of the nozzles in order to modify the trajectory of the projectile, constituted for each nozzle of an electromagnetic device (10), which is controlled independently of the electromagnetic devices of the other nozzles so as to close or open the nozzles independently from one another, characterized in that the control means are arranged such that they ensure the function of a pressure release valve in order to prevent the gas generator from exploding if none of the nozzles were open at a given instant.

2. A steering device according to claim 1, characterized in that each of the electromagnetic devices (10) controls the displacement of a control piston (7, 15, 25), whose first end communicates with the combustion chamber of the gas generator (2), thus controlling the opening and the closing of the corresponding nozzle.

3. A steering device according to claim 2, characterized in that each of the electromagnetic devices (10) ensures when it is energized, via the control piston (7, 25) the opening of the corresponding nozzle, and that a spring (11, 22) acting upon said control piston ensures, when the electromagnetic device is not energized, a position of a control piston adapted to allow the corresponding nozzle to become closed.

4.. A steering device according to claim 2, characterized in that the control piston (15) controls, when the electromagnetic device (10) is energized, the closing of the nozzle (3) by way of ensuring a free passage of the combustion gas leaving the gas generator (2) towards a pressure chamber (16), in which slides a piston (7) adapted to ensure in turn the opening and the closing of the nozzle relative to the outer environment, by virtue of the position and the shape of the control piston relative to the chamber (19) in which it slides, the opening of the nozzle being ensured, when the electromagnetic device is no longer energized, via a new position of the control piston, which puts the pressure chamber into communication with the ambient air.

5. A steering device according to claim 3, characterized in that the closing of the nozzle is ensured by setting the control piston (25), under the pressure of the spring (22), into a position which puts the gas generator (2) into communication with a pressure chamber (16), in which slides a piston (17) adapted to ensure in turn the closing of the nozzle, the opening being ensured by the control piston, which, under the impact of the electromagnetic device (10), puts the pressure chamber into communication with the ambient air.

6. A steering device according to anyone of claims 3 and 4, characterized in that the spring (11, 22) adapted to ensure the closing of the nozzle (3) has a degree of stiffness such that the spring yields to the pressure of the gases from the gas generator (2) above a predetermined pressure ($P_{MAX}$), namely via the surface ($S_{25}$) of the end of the control piston (7, 25).

7. A steering device according to anyone of the claims 3 to 5, characterized in that the control piston (25) presents two large portions (26, 28) on either side of a narrow portion (29) which, when the control piston moves in the chamber (19), allows to put into communication, via a first duct (31), the pressure chamber (16) either with the ambient air via an orifice (21), so as to ensure the opening of the nozzle (3), or with the gases issuing from the gas generator (2) via a second duct (27), in order to allow the nozzle to be closed.

8. A steering device according to claim 7, characterized in that the section ($S_{25}$) of the end of the control piston (25) in contact with the gases issuing from the gas generator (2) and the stiffness of the spring (22) present values which are selected such that said spring yields to the pressure above a predetermined pressure value ($P_{MAX}$).

9. A steering device according to anyone of the preceding claims, characterized in that each assembly constituted of a nozzle (3) and of all components necessary for its control are disposed within a body (1) so as to occupy a predetermined circular sector.

10. A steering device according to anyone of the preceding claims comprising a body (1) within which the device is housed, characterized in that said body is made of a composite material based on carbon and designated as carbon-carbon.

Fig.1

Fig.2

Fig.3

Fig.4

Fig.5